# NEUE EUROPÄISCHE PATENTSCHRIFT

(11) **EP 0 158 251 B2**
(45) Veröffentlichungstag und Bekanntmachung des Hinweises auf die Entscheidung über den Einspruch: **24.02.1993**
(45) Hinweis auf die Patenterteilung: 07.12.1988
(21) Anmeldenummer: 85103860.4
(22) Anmeldetag: 30.03.1985
(51) Int. Cl.: H04N 5/63

(54) **Schaltungsanordnung für den stand-by-Betrieb eines Fernsehempfängers**
Television receiver stand-by circuit
Circuit de fonctionnement en standby d'un récepteur de télévision

(30) Priorität: 03.04.1984 DE 3412341
(43) Veröffentlichungstag der Anmeldung: 16.10.1985
(73) Patentinhaber: Deutsche Thomson-Brandt GmbH, 78003 Villingen-Schwenningen (DE)
(72) Erfinder: Gleim, Günter, D-7730 Villingen Marbach (DE); Hartmann, Uwe, D-7730 Villingen-Schwenningen (DE); Mai, Udo, D-7730 VS-Tannheim (DE); Ohnemus, Fritz, D-7730 Villingen-Schwenningen (DE); Treyer, Herbert, D-7734 Brigachtal (DE); von Umbscheiden, Hans-Georg, D-7731 Unterkirnach (DE)

(56) Entgegenhaltungen:
- DE-A- 3 045 715
- DE-A- 3 137 081
- DE-A- 3 242 333
- US-A- 3 603 732
- US-A- 4 024 577
- Blaupunkt Farbfernseher, Kundendienstschriften FM 100/27 und F8
- ITT Intermetall, Datenbuch 1976/77, "Integrierte Schaltungen für die Konsumelektronik

## Beschreibung

Die Erfindung betrifft eine Schaltungsanordnung nach dem Oberbegriff des ersten Anspruchs.

Bekanntlich konnte die Leistungsaufnahme von Fernsehgeräten in den letzten Jahren immer weiter gesenkt werden. Das trifft jedoch nicht für den sogenannten Stand-by-Betrieb zu. So nennt man den Bereitschaftszustand eines fernbedienbaren Gerätes. Somit wurde das Verhältnis der Leistungsaufnahme im Stand-by-Betrieb zu derjenigen im Normalbetrieb immer ungünstiger.

Es wurden bereits Schaltungsanordnungen für Stand-by-Betrieb mit geringerem Leistungsbedarf entwickelt, die jedoch einen zu hohen Schaltungsaufwand aufweisen.

In der DE-A1-31 37 081 ist ein Fernsehempfänger mit IR-Fernbedienung beschrieben, der im Stand-by-Betrieb völlig vom Netz getrennt ist. Die Stand-by-Stromversorgung erfolgt mittels Solarzellen. Die Ausgestaltung sieht vor, die Solarzellen mit wiederaufladbaren Batterien zu puffern. Mit C-MOS-Vorverstärkern und Empfangs-Dekoderschaltungen ist es möglich, den Stromverbrauch bei ca. 5 V auf Werte in der Größenordnung von 1 mA zu reduzieren.

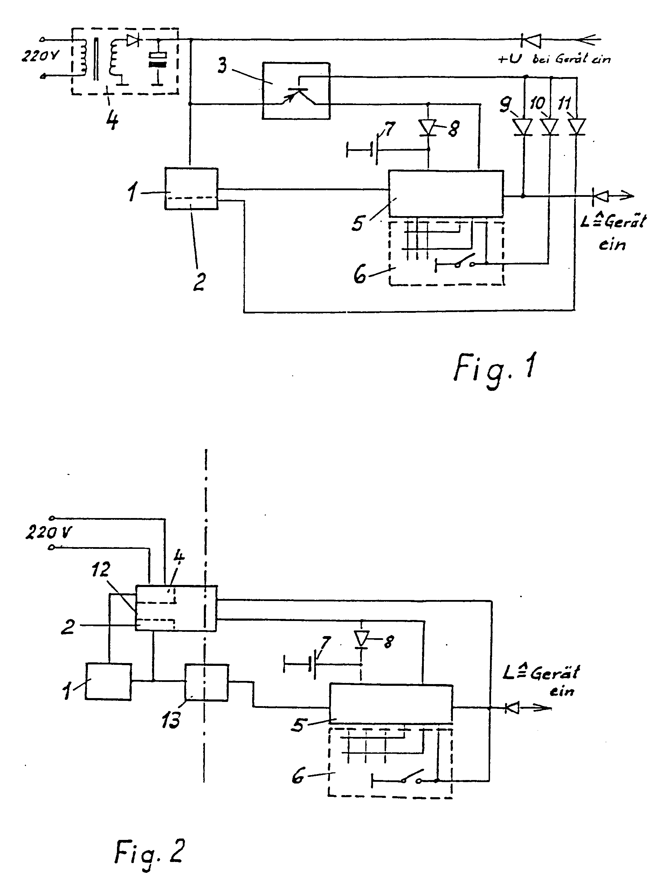

Weiterhin wurde die DE-A1-32 42 333 bekannt, nach der eine Empfangsbereitschafts-Schaltung für fernbediente Fernsehempfänger, bei der der im Fernsehgerät 1 untergebrachte Fernbedienungsempfänger 2 über einen Stand-by-Transformator 6 und eine Spannungsstabilisierung 10 an das Netz angeschlossen ist und bei der ein Schaltrelais 11 für den Netzanschluß des Fernsehgerätes 1 vorgesehen ist. Hierbei soll der übliche vom Benutzer bediente Netzschalter mit Wischkontakt für das Setzen des Schaltrelais 11 wegfallen. Die Aufgabenstellung enthält jedoch nicht die Forderung nach einem besonders leistungsarmen Stand-by-Betrieb, der demzufolge mit der Aufgabenlösung auch nicht ermöglicht wird. Der Stand-by-Transformator 6 ist ständig an das Netz angeschlossen, zwischen diesem und der Spannungsstabilisierung 10 ist ein auf Niederspannung liegender Bereitschaftsschalter 9 vorgesehen, und das Relais wird von einem Transistor 16 gesetzt, der über eine Reihenschaltung aus einem Kondensator 13 und Widerstand 14 zwischen der Stand-by-Versorgungsleitung 20 und Masse differenzierte Schaltimpulse erhält. Aus der Beschreibung der Fig. 1 geht eindeutig hervor, daß der Fernbedienungsempfänger 2, der den Befehlsdecoder 3 und den Netz-Flip-Flop sowie notwendigerweise einen nicht erwähnten Verstärker und Vorverstärker für das Fernbedienungssignal enthält, ständig während des Stand-by-Betriebes gespeist wird.

Der vorliegenden Erfindung lag die Aufgabe zugrunde, Schaltungsanordnungen zu entwickeln, die eine erheblich reduzierte Leistungsaufnahme bei Stand-by-Betrieb ermöglichen und keine wesentlichen Kosten für den Schaltungsaufwand verlangen.

Diese Aufgabe wird für die beiden Lösungen gemäß dem Oberbegriff der Patentansprüche 1 und 2 erfindungsgemäß nach deren kennzeichnenden Merkmalen gelöst.

Weitere Einzelheiten sind der Beschreibung von Ausführungsbeispielen zu entnehmen.

Gemäß den beiden Schaltungsanordnungen für den leistungsarmen Stand-by-Betrieb eines Fernsehempfängers ist nur der Fernbedienungssignalverstärker während dieses Betriebes gespeist. Er gibt, wenn die Fernbedienung betätigt wird, entsprechend codierte Impulse ab. Diese werden gemäß der einen Lösung einer Signalaufbereitungsschaltung und einer Auswerteschaltung zugeführt, wobei letztere erst mit Spannung versorgt und in Betrieb genommen wird, wenn das aufbereitete Signal einen elektronischen Schalter durchschaltet. Erkennt die Auswerteschaltung das Signal als Einschaltsignal, dann gibt sie an das Netzteil des Fernsehgerätes ein Einschaltsignal ab und sorgt selbst für die Aufrechterhaltung ihrer Stromversorgung über den elektronischen Schalter. Stellt die Auswerteschaltung aber fest, daß die empfangenen Impulse nicht dem vereinbarten Code entsprechen, wird die Durchschaltung des elektronischen Schalters nicht aufrecht erhalten.

Die andere Lösung sieht vor, daß der Fernbedienungssignalverstärker vom Netz mit einer gleichgerichteten Spannung während des Stand-by-Betriebes ständig gespeist wird und mit einem Optokoppler und einem Schaltnetzteil zusammenarbeitet, das drei Schaltstufen einnehmen kann. Während des Stand-by-Betriebes bleibt es abgeschaltet (Stand-by I). Empfängt der Fernbedienungssignalverstärker Signale vom Geber, gibt er an das Schaltnetzteil Impulse ab, die es in eine Stand-by-II-Schaltstufe schaltet. Gleichzeitig gelangen die gleichen Impulse über den Optokoppler, der hier zur Netztrennung erforderlich ist, an die Auswerteschaltung. Diese erkennt Einschaltimpulse und schaltet das Schaltnetzteil in seine dritte Schaltstufe, den Normalbetrieb, wobei der Fernsehempfänger und die Auswerteschaltung mit Spannung versorgt werden. Handelt es sich nicht um Einschaltimpulse oder treffen vom Fernbedienungssignalverstärker keine weiteren Impulse zur Erkennung ein, wird die Stand-by-II-Funktion des Schaltnetzteiles wieder aufgehoben, d.h. es wird wieder in seine erste Stand-by-I-Schaltstufe geschaltet.

Gemäß den beiden Lösungen mußein Nahbedienungsteil am Fernsehempfänger, wenn vorgesehen, so mit der Auswerteschaltung zusammenarbeiten, daß die direkte Einschaltung des Fernsehempfängers möglich ist.

Vorteilhafterweise wird mit beiden Lösungen erreicht, daß im Stand-by-Betrieb, d.h. in der fernbedienbaren Bereitschaft, lediglich der geringe Leistungsbedarf für den Fernbedienungssignalverstärker anfällt. Damit ist das Verhältnis des Leistungsbedarfs im Stand-by-Betrieb zu demjenigen im Normalbetrieb wesentlich günstiger.

Nachfolgend werden zwei Ausführungsbeispiele anhand der Zeichnung beschrieben.
Fig. 1 zeigt eine prinzipielle Blockschaltung der ersten Lösung;
Fig. 2 zeigt eine prinzipielle Blockschaltung der zweiten Lösung.

In den Fig. 1 und 2 sind gleichartige Blöcke oder Baugruppen mit den selben Positionszahlen versehen.

Fig. 1 zeigt eine Schaltungsanordnung, in welchem ein Fembedienungssignalverstärker 1 aus einem Netzteil 4 im Stand-by-Betrieb gespeist wird, während alle anderen Verbraucher noch abgeschaltet sind. Wenn der Fembedienungssignalverstärker 1 von einem nicht dargestellten Geber Signale empfängt, gibt er Impulse an eine angeschlossene Auswerteschaltung 5 und an eine Signalaufbereitungsschaltung 2 ab, die den elektronischen Schalter 3 über die Diode 11 durchschaltet. Dadurch wird die Auswerteschaltung 5 mit Spannung versorgt und prüft die eintreffenden Impulse. Wenn es gemäß Codierung Einschaltimpulse sind, hält sie über die Diode 9 ihre Spannungsversorgung selbst aufrecht. Im anderen Fall wird, falls keine weiteren Impulse vom Fembedienungssignalverstärker 1 kommen, der Schalter 3 von der Signalaufbereitungsschaltung 2 wieder ausgeschaltet, wodurch die Schaltung im Stand-by-Betrieb bleibt. Wenn jedoch ein Einschaltsignal vorliegt und erkannt wird, gibt die Auswerteschaltung 5 an ihrem Ausgang durch ein L-Signal an das Netzteil oder Schaltnetzteil des Fernsehempfängers den Einschaltbefehl. Anstatt überdie Fernbedienung kann der elektronische Schalter 3 auch vom Nahbedienteil 6 aus aktiviert und damit das Gerät eingeschaltet werden. Die Auswerteschaltung 5 erkennt dann, daß vom Nahbedienteil 6 aus über die Diode 10 eingeschaltet wurde und sargt ebenfalls für die Aufrechterhaltung der Stromversorgung über den elektronischen Schalter 3. Die erforderliche Energie wird für diesen kurzen Zeitraum von dem Elko des Netzteils 4 geliefert.

Im Beispiel der Fig. 1 ist eine Auswerteschaltung 5 mit vorzugsweiser Speicherung der zuletzt eingestellten Werte dadurch angedeutet, daß eine Batterie 7 und eine Diode 8 so angeschlossen sind, daß die Batterie 7 während des Stand-by-Betriebes die für die Speicherfunktion erforderliche Mindestspannung liefert. Beim Einschalten wird diese Spannung über den elektronischen Schalter 3 auf ihren Betriebswert aufgestockt und die Auswerteschaltung 5 aktiviert.

Am Anschluß des Stand-by-Netzteils 4 ist eine Verbindung über eine Diode zum Netzteil des Fernsehempfängers angeschlossen. Damit soll angedeutet werden, daß über diese Verbindung Strom eingespeist wird, sobald ein Einschaltsignal zum Einschalten des Fernsehempfängers geführt hat.

Fig. 2 zeigt ein zweites Beispiel mit Netztrennung am Eingang (strichpunktierte Linie), indem ein Schaltnetzteil 12 mit drei Schaltstufen vorgesehen ist. Im Stand-by-I-Betrieb (erste Schaltstufe) wird nur der gestrichelt angedeutete Teil des Schaltnetzteils 12 benutzt, um den Fembedienungssignalverstärker 1 mit einer aus dem 220-V-Netzanschluß hergeleiteten Spannung zu speisen. Sobald der Fembedienungssignalverstärker 1 vom Geber Impulse erhält, gibt er an das Schaltnetzteil Impulse ab, die dieses in die zweite Schaltstufe, den Stand-by-II-Betrieb, bringt, und gleichzeitig gelangen diese Impulse über einen zwischengeschalteten Opto-Koppler 13 an die Auswerteschaltung 5, meist ein Micro-Prozessor, der nunmehr vom Schaltnetzteil 12 seine benötigte Energie erhält. Erkennt die Auswerteschaltung 5, daß es sich um Einschaltimpulse gemäß Codierung handelt, dann wird das Schaltnetzteil in seine dritte Schaltstufe, Normalbetrieb, geschaltet und damit das Fernsehgerät gespeist. Wenn aber keine Erkennung geschieht, und auch keine weiteren Impulse ankommen fällt das Schaltnetzteil 12 in seine erste Schaltstufe, nur Stand-by-Versorgung des Fernbedienungsverstärkers (stand-by-I), zurück. Vom Nahbedienteil 6 kann das Schaltnetzteil 12 und damit das Fernsehgerät auch unmittelbar eingeschaltet werden.

Bei diesem Ausführungsbeispiel ist insbesondere vorteilhaft, daß das Schaltnetzteil 12 nur während der Betätigung der Fernbedienung in die zweite Schaltstufe geht. Damit ist wie auch beim ersten beschriebenen Beispiel eine höhere Betriebssicherheit verbunden.

## Patentansprüche

1. Schaltungsanordnung für den leistungsarmen Stand-by-Betrieb eines Fernsehempfängers, der mit einem Fernbedienungssignalverstärker (1), gegebenenfalls einer mit diesem zusammenwirkenden Signalaufbereitungsschaltung (2), einem elektronischen Schalter (3) und einer Auswerteschaltung (5) ausgestattet ist, wobei der Fernbedienungssignalverstärker (1) von einem Geber kommende Fernbedienungssignale empfängt und verstärkt und eine gegebenenfalls vorhandene Signalaufbereitungsschaltung dieselben aufbereitet, dadurch gekennzeichnet, daß während des Stand-by-Betriebes nur der Fernbedienungssignalverstärker (1) und gegebenenfalls die mit ihm zusammenwirkende Signalaufbereitungsschaltung (2) an einer von der Netzspannung abgeleiteten Versorgungsspannung liegen und daß die Auswerteschaltung (5) erst dann über den elektronischen Schalter (3) an die Versorgungsspannung geschaltet wird, wenn der Fernbedienungssignalverstärker (1) wortverdächtige Impulse von einem Geber empfängt und daß sodann die Auswerteschaltung (5) die nachfolgenden Impulse bei entsprechender Codierung als Einschaltimpulse erkennt und daraufhin die Stromversorgung des Fernsehempfängers aktiviert und damit die eigene Stromversorgung über den Schalter (3) aufrecht erhält, während bei Nichterkennen der Impulse als Einschaltimpulse und beim Ausbleiben weiterer wortverdächtiger Impulse die Stromversorgung für die Auswerteschaltung über den Schalter (3) unterbrochen wird.

2. Schaltungsanordnung für den leistungsarmen Stand-by-Betrieb eines Fernsehempfängers, der mit einem Fernbedienungssignalverstärker (1), welcher von einem Geber kommende Fernbedienungssignale als Impulse empfängt, gegebenenfalls aufbereitet und verstärkt weiterleitet, und wahlweise mit einem Nahbedienungsteil (6) ausgestattet ist, wobei eine Auswerteschaltung (5) bzw. Dekodierschaltung, die einen Netz-Flip-Flop enthält, mit ersterem oder beiden zusammenarbeitet, um die Bedienfunktion zu ermöglichen, und ausgestattet mit einem Schaltnetzteil (12) zur Spannungsversorgung des Fernsehempfängers, dadurch gekennzeichnet, daß das Schaltnetzteil (12) im Stand-by-Betrieb in einer ersten Schaltstufe (Stand-by I) abgeschaltet ist und daß der Fernbedienungssignalverstärker (1) so ausgebildet ist, daß er bei Empfang von Fernbedienungssignalen Impulse über einen Opto- koppler ( 13) an die Auswerteschaltung (5) liefert und über Mittel zur Signalaufbereitung (2) im Schaltnetzteil ( 12) dieses in eine zweite Schaltstufe (Stand-by II) schaltet und so die Auswerteschaltung (5) mit Spannung versorgt, die alsdann die nachfolgenden Impulse bei entsprechender Codierung als Einschaltimpulse erkennt und nur dann das Schaltnetzteil (12) in seine dritte Schaltstufe (Normalbetrieb) schaltet und die den Fernsehempfänger speist, während anderenfalls das Schaltnetzteil (12) auf seine erste Schaltstufe (Stand-by I) zurückgeschaltet wird.

## Claims

1. Circuit arrangement for the low-power stand-by operation of a television receiver which is provided with a remote control signal amplifier (1), a signal processing circuit (2) if required, working in tandem with the remote control signal amplifier, an electronic switch (3), and an evaluation circuit (5), wherein the remote control signal amplifier (1) receives and amplifies remote control signals coming from a transmitter, and if required a signal processing circuit processes these signals, characterised in that during stand-by operation only the remote control signal amplifier (1) and possibly the signal processing circuit (2) are connected to a supply voltage drawn from the mains, and that the evaluation circuit (5) only switches over to the supply voltage via the electronic switch (3) when the remote control signal amplifier (1) receives pulses suspected of being words from a transmitter, and that the evaluation circuit (5) then recognises the subsequent pulses as switch-on pulses appropriately coded and thereupon activates the current supply of the television receiver, thereby maintaining its own current supply via the switch (3), while if the pulses are not recognised as switch-on pulses and no further pulses are suspected of being words, the current supply for the evaluation circuit is interrupted via the switch (3).

2. Circuit arrangement for the low-power operation of a television receiver, which receives, if necessary processes and transmits underamplification remote control signals coming as pulses from a transmitter, by means of a remote control signal amplifier (1), and is optionally furnished with a manual control (6), wherein an evaluation circuit (5) ordecodercircuit, containing a mains flip-flop, works in tandem with the remote control signal amplifier (1) or both the remote control signal amplifier and the manual control in order to allow control by the user, and furnished with a switched-mode power supply (12) for supplying voltage to the television receiver, characterised in that the switched-mode powersupply (12) is switched off at a first switching level (stand-by I) during stand-by operation, and that the remote control signal amplifier (1) is designed so that upon reception of remote control signals it delivers pulses via an optocoupler (13) to the evaluation circuit (5) and switches the latter over to a second switching level (stand-by II) by signal-processing means in the switched-mode power supply (12), thus supplying a voltage to the evaluation circuit (5), which then recognises the subsequent pulses appropriately coded as switch-on pulses, and only then switches the switched-mode power supply (12) over to its third switching level (normal operation), and supplies the television receiver, while otherwise the switched-mode power supply (12) is switched back to its first switching level (stand-by I).

## Revendications

1. Montage pour le fonctionnement en état d'attente, consommant peu d'énergie, d'un récepteur de télévision comportant un amplificateur (1) des signaux de télécommande, éventuellement un circuit (2) de préparation de signaux, coopérant avec cet amplificateur, un interrupteur électronique (3) et un circuit d'évaluation (5), l'amplificateur (1) des signaux de télécommande recevant et amplifiant des signaux de télécommande arrivant d'un transmetteur tandis qu'un circuit de préparation des signaux éventuellement présents soumets ces signaux à un traitement préalable, caractérisé par le fait que pendant le fonctionnement en état d'attente, seul l'amplificateur (1) des signaux de télécommande et éventuellement le circuit (2) de préparation des signaux, qui coopé- re avec cet amplificateur, sont placés à une tension d'alimentation dérivée de la tension du réseau, et que le circuit d'évaluation (5) n'est raccordé à la tension d'alimentation par l'intermédiaire de l'interrupteur électronique (3) que lorsque l'amplificateur (1) des signaux de télécommande reçoit des impulsions ayant une signification douteuse de la part d'un transmetteur et qu'alors le circuit d'évaluation (5) identifie les impulsions suivantes, dans le cas d'un codage correspondant, en tant qu'impulsions de branchement et active alors l'alimentation en courant du récepteur de télévision et par conséquent maintient l'alimentation en courant correcte au moyen de l'interrupteur (3), tandis que dans le cas d'une même identification des impulsions en tant qu'impulsions de branchement et en l'absence d'autres impulsions ayant une signification douteuse, l'alimentation en courant pour le circuit d'évaluation est interrompue par l'intermédiaire de l'interrupteur (3).

2. Montage pour le fonctionnement en état d'attente, consommant peu d'énergie, d'un récepteur de télévision comportant un amplificateur (1) de signaux de télécommande qui reçoit, prépare éventuellement et retransmet en les amplifiant, en tant qu'impulsions, des signaux de télécommande délivrés par un transmetteur, et est équipé au choix d'une unité (6) de commande rapprochée, un circuit d'évaluation (5) on un circuit de décodage contenant une bascule bistable e raccordement au réseau coopérant avec l'amplificateur ou avec l'amplificateur et l'unité de commande rapprochée pour permettre la fonction de commande, et est équipé d'un bloc d'alimentation réseau commutable (12) servant à fournir la tension d'alimentation du récepteur de télévision, caractérisé par le fait que le bloc d'alimentation réseau commutable (12) est déconnecté lors du fonctionnement en état d'attente, en étant placé dans un premier état de commutation (attente I), et que l'amplificateur (1) des signaux de télécommande est agencé de telle sorte que lors de la réception de signaux de télécommande, il envoie des impulsions par l'intermédiaire d'un optocou- pleur (13) au circuit d'évaluation (5) et, par l'intermédiaire de moyens (2) servant à préparer les signaux et situés dans le bloc d'alimentation réseau commutable (12), commute ce dernier dans un second état de commutation (attente II) et alimente ainsi le circuit d'évaluation (5) avec une tension qui identifie alors les impulsions suivantes, dans le cas d'un codage correspondant, en tant qu'impulsions de branchement et commute alors seulement le bloc d'alimentation autocom- mutable (12) dans son troisième état de commutation (fonctionnement normal) et alimente le récepteur de télévision, alors que, sinon, le bloc d'alimentation réseau commutable (12) est commuté en retour dans son premier état de commutation (attente I).
